# FASCICULE DE BREVET EUROPEEN

(11) **EP 1 379 093 B1**
(45) Date de publication et mention de la délivrance du brevet: **03.11.2010**
(21) Numéro de dépôt: 03291606.6
(22) Date de dépôt: 30.06.2003
(51) Int. Cl.: H04W 12/06

(54) **Procede de securisation d'un terminal mobile de telecommunication**
Sicherungsverfahren für ein mobiles Kommunikationsendgerät
Method for securing a mobile communications terminal

(30) Priorité: 04.07.2002 FR 0208375
(43) Date de publication de la demande: 07.01.2004
(73) Titulaire: IPG Electronics 504 Limited, St Peter Port Guernsey GY1 3QL (GB)
(72) Inventeur: Guirauton, Alain, 95100 Argenteuil (FR); Crozat, Marielle, 78290 Croissy sur Seine (FR); Massy, Christian, 92310 Sevres (FR)
(74) Mandataire: Talbot-Ponsonby, Clare Josephine

(56) Documents cités:
- EP-A- 0 607 767
- EP-A- 0 822 730
- EP-A- 1 047 277
- EP-A- 1 107 627
- FR-A- 2 791 509
- FR-A- 2 797 138

## Description

La présente invention concerne un procédé de sécurisation d'un terminal mobile de télécommunication. Elle concerne également un terminal mobile comprenant des moyens de mise en oeuvre du procédé de sécurisation.

Véritable phénomène de société, la téléphonie mobile fait partie de notre environnement quotidien avec un parc mondial qui se compte en centaines de millions de téléphones mobiles. On rappelle que ces terminaux de télécommunication ou téléphones mobiles comportent généralement une carte à puce classiquement appelée carte (U)SIM.

On rappelle également qu'une carte (U)SIM contient des informations non modifiables par l'utilisateur, qui permettent de l'identifier et d'identifier l'abonné, ces numéros étant par exemple le numéro d'identification du circuit intégré de la carte ICCid et le numéro d'abonné au réseau de téléphonie mobile international IMSI (International Mobile Subscriber Identify). La carte (U)SIM est délivrée par un opérateur de télécommunication, lors d'une souscription au moment de l'acquisition d'un téléphone mobile. Cette carte est mise en place dans le téléphone mobile et le rend opérationnel dés que l'utilisateur rentre un code personnel d'identification code PIN (Personnal Identifier Number) à partir du clavier.

Ce code PIN est stocké de manière sécurisée par la carte et n'est connu que de l'utilisateur. A chaque mise en fonction du téléphone, le code PIN est demandé à l'utilisateur a moins qu'il n'ait inhibé cette fonction.

La carte (U)SIM comporte en outre dans une mémoire non volatile, un programme de communication avec le terminal. Ce programme correspond au protocole de communication avec les terminaux de téléphonie mobile du standard GSM TS 11-11 et 3GPP (TS 31.101).

La carte (U)SIM comporte aussi dans une mémoire de programme un ou plusieurs programmes d'application.

Le terminal mobile d'un abonné Ao est par conséquent équipé d'un lecteur de carte à puce de type carte (U)SIM (carte permettant d'assurer notamment l'identification d'abonné). Ce lecteur permet des communications avec la carte (U)SIM, Co de cet abonné. Le lecteur de carte comprend pour cela une interface homme-machine permettant d'assurer des échanges entre l'utilisateur et la carte à travers le terminal. Pour permettre ce dialogue, l'utilisateur a à sa disposition une interface d'affichage (écran) et de saisie (clavier).

Le terminal est également équipé d'autres circuits électroniques qu'il n'est pas nécessaire de détailler pour la compréhension de la suite, tels que des moyens de traitement de données, de mémorisation de programmes et de données ainsi que des moyens de communications avec l'extérieur par exemple avec un autre dispositif électronique et également avec un ou des réseaux de télécommunication.

Le problème posé va être développé dans ce qui suit.

L'accroissement du marché de la téléphonie mobile fait apparaître un marché parallèle de téléphones mobiles volés grandissant.

Un voleur qui s'empare du téléphone d'une autre personne peut utiliser ce téléphone si ce dernier est actif jusqu'à épuisement de la batterie. Après quoi, il ne lui est pas possible de l'utiliser tel quel sans la connaissance du code PIN (si la fonction est activée, valeur par défaut) du titulaire. Cependant il lui est tout à fait possible de mettre à bord une autre carte à puce (de type (U)SIM ou autre) et d'utiliser le téléphone mobile volé avec cette nouvelle carte à puce.

Ainsi, le vol d'un téléphone de technologie récente peut permettre le remplacement d'un téléphone ancien. Si bien qu'un commerce de téléphones volés existe car il permet à des personnes faisant l'acquisition de ces téléphones, de les utiliser par exemple en plaçant une carte à puce à communications prépayées ou de récupérer la carte (U)SIM d'un téléphone ancien modèle pour la mettre dans le nouveau modèle acheté/volé.

Ce marché est réel dans la mesure où il est possible d'utiliser un téléphone avec une carte (U)SIM autre que celle du premier abonnement.

Une solution connue à ce, consiste à verrouiller le fonctionnement du mobile avec la carte (U)SIM avec laquelle il a été livré dans le cadre d'un achat groupé (poste et abonnement (Pack)). Ce mécanisme est défini par l'ETSI et s'appelle SIM Lock. Il protège l'opérateur contre l'utilisation d'un téléphone avec un abonnement souscrit auprès d'un autre opérateur. Cette solution est gérée par l'opérateur de télécommunication pour une durée limitée. Le marché étant arrivé à maturité les consommateurs achètent des terminaux récents pour les utiliser avec l'abonnement (SIM) dont ils disposent. De façon pratique, un abonné qui vient de se faire voler son téléphone, appelle son opérateur de télécommunication pour signaler ce vol et l'opérateur verrouille l'utilisation de sa carte (U)SIM. On voit que cette solution protège l'abonné contre l'utilisation de son abonnement (encore faudrait-il que son code PIN, si la fonction est activée, soit découvert) et évite à l'opérateur des litiges concernant des refus de paiement.

Cette solution ne permet pas de remédier au problème du vol, puisqu'un téléphone volé peut être utilisé.

Les documents FR-A- 2 791 509 et EP-A- 1 047 277 décrivent un procédé pour sécuriser l'utilisation d'un terminal mobile dans lequel on compare un mot de passe stocké dans le terminal avec un mot de passe saisi par l'utilisateur. En cas de discordance, le fonctionnement du terminal est bloqué.

Il existe une solution consistant à analyser l'empreinte digitale de l'utilisateur afin d'autoriser ou non l'utilisation d'un téléphone mobile.

Cependant, une telle solution empêche un éventuel partage d'utilisation du téléphone mobile, par exemple, l'abonné ne pourra pas prêter son téléphone mobile à un membre de sa famille ou à un ami. En outre des équipements supplémentaires pour l'analyse d'empreinte sont nécessaires et augmentent le coût du téléphone mobile.

La présente invention a pour but de remédier à cette situation.

L'invention a plus particulièrement pour objet un procédé pour sécuriser l'utilisation d'un terminal mobile de télécommunication tel que défini dans la revendication 1.

Avantageusement, l'utilisateur à la possibilité de saisir N fois le mot de passe enregistré, si à l'issue des N fois, il n'y a pas de concordance, le terminal détruit le mot de passe enregistré sur la carte de type (U)SIM et se met hors service.

Dans une variante, il est prévu que le terminal crypte le mot de passe avant de le stocker sur les moyens de mémorisation et sur la carte.

Le cryptage du mot de passe peut être réalisé par une fonction de type DES, ou fonction de hachage appliquée sur les données d'entrée constituées par le numéro d'identification personnel (PIN) et le mot de passe (PASS) ou par une donnée interne au terminal (par exemple IMSI) et le mot de passe.

L'invention a également pour objet un terminal mobile de télécommunication comprenant des moyens de mémorisation, principalement caractérisé en que les moyens de mémorisation comportent une mémoire de programme (MEM) contenant un programme apte à mettre en oeuvre le procédé de sécurisation selon l'invention.

Selon une autre caractéristique, la mémoire de programme est dans au moins un composant intégré spécifique de type ASIC (Application Specific Integrated Circuit), ou répartie sur plusieurs de ces composants.

Selon une autre caractéristique, le terminal comprend une interface de communication pour assurer des échanges avec un dispositif de mémorisation externe relié au terminal pour la mémorisation du mot de passe.

D'autres particularités et avantages de l'invention apparaîtront clairement à la lecture de la description suivante qui est donnée à titre d'exemple non limitatif et en regard des figures annexées dans lesquelles :
- la figure 1 illustre les étapes du procédé ;
- la figure 2 est un schéma simplifié d'un téléphone.

Pour remédier au problème du vol des téléphones mobiles de télécommunication, il est proposé par la présente invention, une solution qui de façon générale empêche l'utilisation de tout téléphone mobile par une personne non autorisée. Ainsi, à terme l'utilisation d'un terminal volé étant reconnue impossible, le marché parallèle de terminaux volés devrait disparaître et la sécurité publique accrue.

A cette fin, le procédé propose une solution consistant à bloquer le fonctionnement du téléphone mobile par un mécanisme de sécurité mis en oeuvre par le téléphone mobile lui-même.

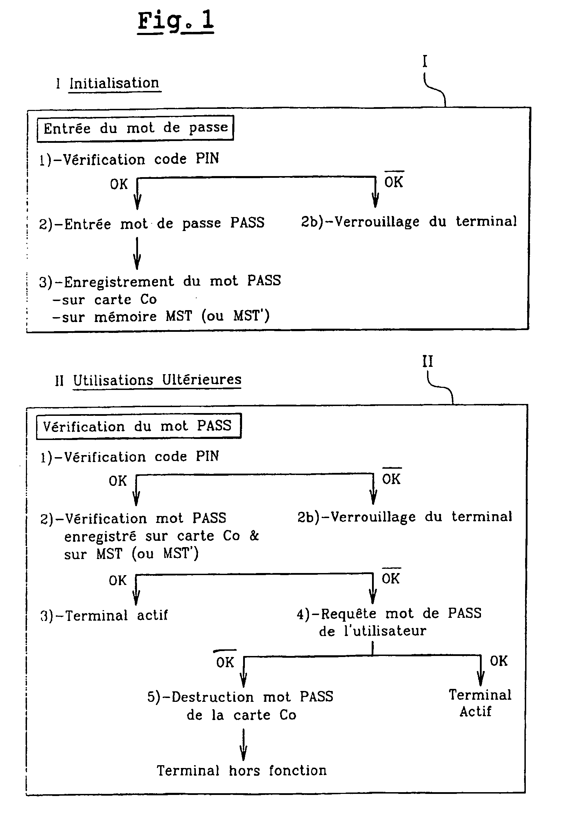

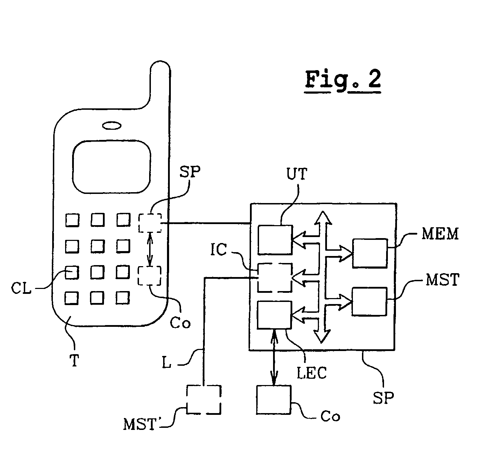

Comme on peut le voir sur la figure 1, Ce mécanisme comporte une étape d'initialisation I exécutée une fois pour chaque nouvelle carte d'abonnement insérée dans le terminal, puis pour les utilisations suivantes, étape II sur cette figure, une vérification du mot de passe. La description qui est donnée ci-après est faite également en référence à la figure 2 sur laquelle le schéma électronique simplifié du terminal est représenté. On a en effet représenté uniquement les fonctions du composant utiles à la mise en oeuvre de la présente invention à savoir une unité de traitement UT, des mémoires de programme MEM, de données MST, un lecteur de carte à puce LEC, une interface de communication avec un dispositif de mémorisation extérieur MST'.

### I - Etape d'Initialisation : Enregistrement d'un mot de passe « PASS » par l'abonné.

Cette étape d'initialisation se déroule lorsque l'abonné est sollicité pour et active la fonction sécurité proposée sur le menu qui se déroule à la mise sous tension de son téléphone mobile T. De façon pratique, cette initialisation sera faite lors d'une première utilisation du terminal et de la carte Co de l'abonné présente dans ce terminal T.

Cette étape est exécutée après la procédure 1-) de vérification du code PIN de l'abonné (numéro d'identification d'abonné) si elle est activée. Ainsi, l'abonné Ao tape son code PIN sur le clavier du téléphone mobile T. La carte (U)SIM Co vérifie ce code en le comparant au code PIN enregistré dans une mémoire MSC interne sécurisée. Si le code entré par l'utilisateur correspond au code mémorisé, (ou directement si la fonction est désactivée) le téléphone mobile demande alors 2-) à l'utilisateur abonné de lui fournir un mot de passe. Le mot de passe choisi « PASS » est entré par l'abonné à partir du clavier CL, et est mémorisé 3-) en mémoire sécurisée MST du téléphone mobile et en mémoire sécurisée MSC de la carte (U)SIM Co.

Selon une autre alternative, le mot de passe peut-être enregistré sur un dispositif MST' externe au terminal mais possédant avec ce dernier, soit une liaison infra-rouge, soit une liaison L Bluetooth, ou autre et une interface de communication IC adaptée au type de liaison. C'est à ce moyen externe que le terminal demandera confirmation interdisant l'utilisation du téléphone sans la proximité de ce moyen.

### II - Utilisations suivantes

Lors des utilisations suivantes, le mécanisme de protection met en oeuvre les étapes consistant pour le terminal à vérifier le mot de passe.

Cette vérification du mot de passe s'effectue en pratique après vérification du code PIN de l'utilisateur.

La vérification du code PIN est réalisée par une procédure classique mise en oeuvre par la carte (U)SIM. Si le code PIN entré par l'utilisateur à partir du clavier du terminal est bon, alors le mot de passe enregistré dans la carte est demandé par le terminal à cette dernière qui le lui fournit. L'utilisateur n'a pas à ce stade à fournir le mot de passe.

Le terminal effectue la comparaison entre le mot de passe qui est stocké dans une de ses mémoires interne et le mot de passe fourni par la carte (U)SIM.

Si les deux mots de passe sont identiques alors le terminal se met en état de fonctionnement.

Si les deux mots de passe ne coïncident pas, le terminal demande à l'utilisateur d'entrer son mot de passe. Cette requête sera renouvelée N fois le cas échéant si le premier mot de passe entré par l'utilisateur n'est pas correct. Le nombre N pourra être par exemple égal à 3.

Avantageusement, il est prévu qu'en cas d'échec à l'issue de la première comparaison, le terminal détruise le mot de passe enregistré sur la carte.

Ainsi, si l'abonné a changé de carte (U)SIM et que le terminal n'est pas volé, l'abonné a l'occasion de rentrer son mot de passe, le terminal lui demande le mot de passe à l'issu de l'échec de la première vérification (mot fourni par la carte au terminal), et le mot de passe entré est enregistré sur sa nouvelle carte.

Si le terminal est volé la vérification du mot de passe aboutit à un échec même à l'issu des différents essais. Le terminal provoque alors une destruction de composants clé internes le rendant irréparable et par conséquent inutilisable.

Dans le cas où l'abonné utilise un autre terminal utilisant une carte (U)SIM comprenant déjà un mot de passe, le code PIN est demandé à l'utilisateur pour vérification et si ce code est valide, la procédure de vérification du mot de passe est mise en oeuvre. Tout d'abord de façon automatique, la carte fournissant au terminal après requête de ce dernier, le mot de passe (qu'elle comporte en mémoire), puis en cas d'échec, la vérification porte sur le mot de passe que l'utilisateur entre à partir du clavier. A l'issue de cette vérification, soit on aboutit à un échec et alors le terminal détruit des composants clé, soit on aboutit à un succès et le mot de passe entré est enregistré sur la carte.

Le procédé qui vient d'être décrit est mis en oeuvre par un programme « fonction de sécurité » chargé dans une mémoire de programme du téléphone mobile. La fonction de sécurité pourra être activée une fois pour toutes, par l'abonné, par exemple à l'achat du téléphone.

La sécurité des mémoires MSC de la carte (U)SIM provient de la sécurité habituelle mise en oeuvre dans les cartes à puce. Il s'agit d'une sécurité physique de la puce (destruction de la puce en cas d'intrusion) et logique (algorithmes de contre mesure par exemple).

La sécurité des moyens de mémorisation du terminal provient du fait de l'utilisation d'un composant spécifique de type ASIC installé dans le terminal pour assurer cette fonction sécurité et à un traitement des données interne au composant.

Le mot de passe peut être stocké tel quel ou sous forme cryptée il peut aussi être recalculé à chaque demande par le composant. Le cryptage du mot de passe peut être réalisé par une fonction injective de type DES (ou 3DES), ou par une fonction de hachage appliquée sur les données d'entrée constituées par le numéro d'identification personnel PIN et le mot de passe PASS.

## Revendications

1. Procédé pour sécuriser l'utilisation d'un terminal mobile (T) de télécommunication comprenant un lecteur (LEC) de carte à puce de type carte (U)SIM, **caractérisé en ce qu'**il comprend pour le terminal :
une étape d'initialisation (I) consistant:
- à demander à l'utilisateur d'entrer au moins un mot de passe personnel (PASS) après la mise en place d'une carte SIM (Co) dans le terminal,
- à enregistrer ce mot de passe dans la carte (U)SIM et sur des moyens (MST ; MST') de mémorisation du terminal,
puis lors d'utilisations ultérieures :
- comparer un mot de passe fourni par la carte avec le mot de passe (PASS) enregistré durant l'étape d'initialisation ;
- Si le mot de passe fourni par la carte est différent du mot de passe (PASS) enregistré, demander à l'utilisateur de saisir un mot de passe et comparer le mot de passe saisi avec le mot de passe (PASS) enregistré durant l'étape d'initialisation ;
- bloquer son fonctionnement en cas de discordance.

2. Procédé pour sécuriser l'utilisation d'un terminal selon la revendication 1, **caractérisé en ce que** l'utilisateur à la possibilité de saisir N fois le mot de passe enregistré, si à l'issue de N fois, il n'y a pas de concordance, le terminal (T) détruit le mot de passe enregistré sur la carte de type (U)SIM et se met hors service.

3. Procédé selon l'une quelconque des revendications 1 à 2, **caractérisé en ce que** le terminal (T) crypte le mot de passe avant de le stocker sur les moyens de mémorisation (MST ; MST') et sur la carte (Co).

4. Procédé selon la revendication 3, **caractérisé en ce que** le cryptage du mot de passe est réalisé par une fonction de type DES, ou fonction de hachage appliquée sur les données d'entrée constituées par le numéro d'identification personnel (PIN) et le mot de passe (PASS) ou par une donnée interne au terminal (par exemple IMSI) et le mot de passe.

5. Terminal mobile (T) de télécommunication comprenant des moyens de mémorisation, **caractérisé en que** les moyens de mémorisation comportent une mémoire de programme (MEM) contenant un programme apte à mettre en oeuvre le procédé de sécurisation selon l'une quelconque des revendications précédentes.

6. Terminal mobile de télécommunication selon la revendication 5, **caractérisé en ce que** la mémoire de programme est dans au moins un composant intégré spécifique (SP) de type ASIC (Application Spécific Integrated Circuit).

7. Terminal mobile de télécommunication selon la revendication 5 ou 6, **caractérisé en ce qu'**il comprend une interface de communication (IC) pour assurer des échanges avec un dispositif de mémorisation externe (MST') relié au terminal pour la mémorisation du mot de passe.

## Claims

1. Procedure for securing the use of a mobile telecommunications terminal (T), comprising a reader (LEC) for chip cards of the (U)SIM card type, **characterised in that** it includes the following for the terminal:
an initialisation step (I) consisting of:
- requesting that the user enter at least one personal password (PASS) after the insertion of a SIM card (Co) into the terminal,
- saving this password in the (U)SIM card and on the storage means (MST; MST') of the terminal,
then upon subsequent uses:
- comparing a password provided by the card with the password (PASS) saved during the initialisation step;
- if the password provided by the card is different from the password (PASS) saved, request that the user inputs a password and compare the password input with the password (PASS) saved during the initialisation step;
- blocking its functions in the case of a mismatch.

2. Procedure for securing the use of a terminal according to claim 1, **characterised in that** the user has the possibility of entering the saved password N times; if, after the N times, there is no match, the terminal (T) destroys the password saved on the (U)SIM card and disables itself.

3. Procedure according to any one of claims 1 to 2, **characterised in that** the terminal (T) encrypts the password before storing it on the storage means (MST; MST') and on the card (Co).

4. Procedure according to claim 3, **characterised in that** the encryption of the password is carried out by a function of the DES type, or a hash function applied to the input data constituted by the personal identification number (PIN) and the password (PASS), or by a datum internal to the terminal (for example IMSI) and the password.

5. Mobile telecommunications terminal (T) including storage means, **characterised in that** the storage means comprise a program memory (MEM) containing a program suitable for implementing the security procedure according to any one of the preceding claims.

6. Mobile telecommunications terminal according to claim 5, **characterised in that** the program memory is in at least one specific integrated component (SP) of the ASIC (Application Specific Integrated Circuit) type.

7. Mobile telecommunications terminal according to claim 5 or 6, **characterised in that** it includes a communications interface (IC) to ensure the exchanges with an external storage device (MST') linked to the terminal for the storage of the password.

## Patentansprüche

1. Verfahren zur sicheren Verwendung eines mobilen Telekommunikationsterminals (T), umfassend ein Lesegerät (LEC) für Chipkarten des (U)SIM-Kartentyps, **dadurch gekennzeichnet, dass** das Verfahren die folgenden Schritte umfasst:
einen Initialisierungsschritt (I), bestehend aus:
- Aufforderung zur Eingabe mindestens eines persönlichen Passwortes (PASS) vom Anwender nach dem Einlegen einer SIM-Karte (Co) in das Terminal,
- Speichern des Passwortes auf der (U)SIM-Karte und auf dem Speichermedium (MST; MST') des Terminals,
bei nachfolgenden Anwendungen:
- Vergleichen eines von der Karte bereitgestellten Passwortes mit dem während des Initialisierungsschrittes gespeicherten Passwortes (PASS);
- wenn sich das von der Karte bereitgestellte Passwort von dem gespeicherten Passwort (PASS) unterscheidet, Aufforderung zur erneuten Eingabe des Passwortes durch den Anwender und Vergleichen des eingegebenen Passwortes mit dem während des Initialisierungsschrittes gespeicherten Passwortes (PASS);
- Sperren der Funktionen bei Nichtübereinstimmung.

2. Verfahren zur sicheren Verwendung eines Terminals nach Anspruch 1, **dadurch gekennzeichnet, dass** der Anwender die Möglichkeit hat, das gespeicherte Passwort n-mal einzugeben; wenn nach n-maliger Eingabe keine Übereinstimmung erfolgt ist, vernichtet das Terminal (T) das auf der (U)SIM-Karte gespeicherte Passwort und deaktiviert sich selbst.

3. Verfahren nach einem der Ansprüche 1 bis 2, **dadurch gekennzeichnet, dass** das Terminal (T) das Passwort vor der Speicherung in dem Speichermedium (MST; MST') und auf der Karte (Co) verschlüsselt.

4. Verfahren nach Anspruch 3, **dadurch gekennzeichnet, dass** die Verschlüsselung des Passwortes durch eine Funktion des DES-Typs oder einer Hash-Funktion, die auf die von der persönlichen Identifikationsnummer (PIN) und dem Passwort (PASS) gebildeten Eingabedaten angewendet wird, oder durch ein internes Datum des Terminal (zum Beispiel IMSI) und das Passwort ausgeführt wird.

5. Mobiles Telekommunikationsterminal (T) mit Speichermedium, **dadurch gekennzeichnet, dass** das Speichermedium einen Programmspeicher (MEM) umfasst, der ein Programm enthält, das zur Implementierung des Sicherheitsverfahren nach einem der vorangegangenen Ansprüche geeignet ist.

6. Mobiles Telekommunikationsterminal nach Anspruch 5, **dadurch gekennzeichnet, dass** sich der Programmspeicher in mindestens einer speziellen integrierten Komponente (SP) des ASIC (Application Specific Integrated Circuit - anwendungsspezifischer Schaltkreis)-Typs befindet.

7. Mobiles Telekommunikationsterminal nach Anspruch 5 oder 6, **dadurch gekennzeichnet, dass** es eine Kommunikationsschnittstelle (IC) beinhaltet, um den Austausch mit einer externen Speichereinrichtung (MST') sicherzustellen, die zur Speicherung des Passwortes mit dem Terminal verbunden ist.
